(19) Europäisches Patentamt
European Patent Office
Office européen des brevets

(11) Publication number: 0 213 466
A2

(12) **EUROPEAN PATENT APPLICATION**

(21) Application number: 86111068.2

(22) Date of filing: 11.08.86

(51) Int. Cl.⁴: C 08 G 63/62
C 08 L 69/00

(30) Priority: 22.08.85 US 768256

(43) Date of publication of application:
11.03.87 Bulletin 87/11

(84) Designated Contracting States:
DE FR GB IT NL

(71) Applicant: GENERAL ELECTRIC COMPANY
1 River Road
Schenectady New York 12305(US)

(72) Inventor: Yates III, John Bennie
38 Chrisken Drive
Glenmont New York 12077(US)

(72) Inventor: Smith, David John
R.D. No. 1 Box 36B
Howes Cave New York 12092(US)

(72) Inventor: Campbell, John Robert
41 Pepper Hollow
Clifton Park New York 12065(US)

(74) Representative: Catherine, Alain et al,
General Electric - Deutschland Munich Patent Operations
Frauenstrasse 32
D-8000 München 5(DE)

(54) **Method for preparing sulfonated polycarbonates and their use as flame retardants.**

(57) Polycarbonate resins are sulfonated by reaction with a sulfur trioxide-phosphate ester complex, preferably a 2:1 complex of sulfur trioxide with triethylphosphate. The sulfonated polymer is preferably converted to a salt, typically by reaction with a metal salt of a β-diketone in a non-polar medium. The resulting sulfonate salts are useful as flame retardant agents for aromatic polycarbonates.

# METHOD FOR PREPARING SULFONATED POLYCARBONATES AND THEIR USE AS FLAME RETARDANTS

This invention relates to the preparation of sulfonated polycarbonates, and in particular to an improved method for said preparation.

Polycarbonates, examples of which are the polycarbonates of 2,2-bis(4-hydroxyphenyl)propane (hereinafter "bisphenol A"), are a well known class of condensation polymers widely used as engineering resins. Also used are the polyester-polycarbonates, exemplified by polymers containing polycarbonate units and bisphenol A-terephthalic acid polyester units.

Ionomers, or polymers containing ionic substituents, are also well known and find utility in a number of applications. In particular, it has been found that the impact resistance of many aromatic polymers can be improved by blending them with an ionomer such as a sulfonated elastomer and, as a compatibilizing agent, an ionomeric aromatic polymer similar to the base polymer. Reference is made, for example, to European Patent Application 136,221, the disclosure of which is incorporated by reference herein.

A number of methods have been proposed for introducing sulfonate groups into polycarbonates. For example, U.S. Patents 4,403,087 and 4,469,860 describe the end-capping of polycarbonates with sulfonate-substituted phenols and bisphenols. This method is inherently limited by the fact that the concentration of sulfonate groups is inversely proportional to the length of the polymer chain. There have

also been reports of the use of sulfur trioxide and chlorosulfonic acid to sulfonate polycarbonates (see, for example, U.S. Patent 3,978,024), but it is generally found that the results of this reaction are unpredictable and a substantial amount of crosslinking and/or sulfone formation may occur. Other methods, such as the addition of sulfonating agents to an interfacial polymerization mixture, may cause severe emulsion formation. Thus, there is interest in developing new and improved methods for sulfonating polycarbonates.

A principal object of the present invention, therefore, is to provide an improved method for sulfonating polymers containing polycarbonate units.

A further object is to provide a method for introducing substantial numbers of sulfonate groups into a polycarbonate by a procedure which is easily conducted and reproducible.

Other objects will in part be obvious and will in part appear hereinafter.

According to the present invention, polymers containing structural units of the formula

(I) $$-O-A^1-O-\overset{\overset{O}{\|}}{C}-,$$

wherein $A^1$ is a divalent aromatic hydrocarbon radical, are sulfonated by a method which comprises reacting said polymer with a complex of sulfur trioxide with a phosphate ester having the formula

(II) $(RO)_3PO$,

wherein R is a lower alkyl or lower aryl radical.

The $A^1$ values in the polymers used in the method of this invention include such aromatic radicals as m-phenylene, p-phenylene, 4,4'-biphenylene, bis(4-phenylene)methane, 2,2-bis(4-phenylene)propane (derived from bisphenol A), and similar radicals such as those which correspond to the dihydroxy compounds disclosed by name or formula (generic or specific) in U.S. Patent 4,217,438, the disclosure of which is incorporated by reference herein. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often, however, all $A^1$ radicals are hydrocarbon radicals.

The $A^1$ radicals preferably have the formula

(III) $-A^2-Y-A^3-$ ,

wherein each of $A^2$ and $A^3$ is a single-ring divalent aromatic radical and Y is a bridging radical in which one or two atoms separate $A^2$ from $A^3$. The free valence bonds in formula II are usually in the meta or para positions of $A^2$ and $A^3$ in relation to Y. Such $A^1$ values may be considered as being derived from bisphenols of the formula $HO-A^2-Y-A^3-OH$.

In formula III, the $A^2$ and $A^3$ values may be unsubstituted phenylene or substituted derivatives thereof, illustrative substituents (one or more) being alkyl, alkenyl

(e.g., crosslinkable-graftable moieties such as vinyl and allyl), halo (especially chloro and/or bromo), nitro, alkoxy and the like. Unsubstituted phenylene radicals are preferred. Both $A^2$ and $A^3$ are preferably p-phenylene, although both may be o- or m-phenylene or one o- or m-phenylene and the other p-phenylene.

The bridging radical, Y, is one in which one or two atoms, preferably one, separate $A^2$ from $A^3$. It is most often a hydrocarbon radical and particularly a saturated radical such as methylene, cyclohexylmethylene, 2-[2.2.1]-bicycloheptylmethylene, ethylene, 2,2-propylene, 1,1-(2,2-dimethylpropylene), 1,1-cyclohexylene, 1,1-cyclopentadecylene, 1,1-cyclododecylene or 2,2-adamantylene, especially a gem-alkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula III is the 2,2-bis(4-phenylene)propane radical, which is derived from bisphenol A and in which Y is isopropylidene and $A^1$ and $A^2$ are each p-phenylene.

In addition to the polycarbonate structural units of formula I, the polymer may contain polyester units derived from dihydroxyaromatic compounds, such as those corresponding to the aforementioned A values, and dicarboxylic acid units derived from such compounds as isophthalic acid and terephthalic acid. Polyester-polycarbonates of this type are also known in the art. Because polycarbonates are in common use and are particularly adaptable to sulfonation by the method of this invention, frequent reference to

polycarbonates will be made hereinafter. However, it should be understood that polyester-polycarbonates may be substituted therefor as appropriate.

The polymers which may be sulfonated according to this invention generally have weight average molecular weights (as determined by gel permeation chromatography) up to about 3,000,000, preferably about 10,000-100,000 and most desirably about 20,000-80,000.

According to this invention, the polycarbonate is reacted with a sulfur trioxide-phosphate ester complex. The phosphate ester is represented by formula II, wherein R is a lower alkyl or lower aryl radical (i.e., one containing up to 7 carbon atoms). Illustrative R values are methyl, ethyl, 1-propyl, 2-propyl, 1-pentyl and phenyl. The preferred R radicals are alkyl radicals having up to 4 carbon atoms, especially straight chain alkyl radicals and most preferably the ethyl radical.

Sulfur trioxide complexes of the aforementioned phosphate esters containing 1 to 2 moles of sulfur trioxide per mole of phosphate ester are known. In the case of triphenyl phosphate, the initial portion of sulfur trioxide ordinarily sulfonates one or more of the phenyl radicals to yield sulfophenyl radicals. In most instances, the equimolar sulfur trioxide-phosphate ester complexes are such mild sulfonating agents that their use requires severe conditions of temperature, pressure or the like. Therefore, the use of complexes having a molar ratio of sulfur trioxide to phosphate ester of 2:1 is preferred. The procedures and conditions described hereinafter refer to the use of such 2:1 complexes.

The preparation of the sulfonated polymer is generally effected by merely contacting the polycarbonate with the sulfur trioxide complex at a temperature within the range of about 10-50°C, preferably about 20-40°C. Only one mole of sulfur trioxide per mole of complex is utilized for sulfonation under these conditions, with the remainder being converted to sulfuric acid. The proportion of complex with respect to polycarbonate is not critical and may be adjusted as known in the art to yield a product with the desired degree of sulfonation.

It is preferred to employ a diluent for the polymer and complex. The diluent should be resistant to sulfonation, and this generally rules out aromatic solvents. It is possible to use aliphatic and alicyclic materials such as hexane, heptane and cyclohexane, but such materials ordinarily do not dissolve the polymer and therefore should be used alone only when surface sulfonation is desired. This may be effected, for example, by forming a slurry of polymer particles in a combination of complex and aliphatic solvent. For more complete sulfonation, a solvent comprising (at least in part) at least one chlorinated aliphatic hydrocarbon such as chloroform or 1,2-dichloroethane is preferred. Such chlorinated materials may, if desired, be used in combination with aliphatic hydrocarbons of the type previously described.

The product of the method of this invention is a polycarbonate containing free sulfonic acid groups. Being strongly acidic, these groups will react with the carbonate moieties and degrade the polymer if the polymer is stored for long periods or is dissolved in a polar medium. If it is desired to isolate the free sulfonic acid for short,

transitory periods, this may be achieved by combining the polymer solution with a non-polar non-solvent such as hexane.

For prolonged storage, it is necessary to neutralize the free sulfonic acid. Neutralization is effected in a non-aqueous medium, usually in a relatively non-polar organic liquid such as one of the solvents described hereinabove. It may sometimes be necessary to combine said non--polar liquid with a minor amount of a more polar solvent such as an alcohol or ether. Illustrative polar solvents are lower alkanols such as ethanol, 1-propanol and 2-propanol, and ethers such as dioxane, tetrahydrofuran, ethylene glycol monomethyl ether and ethylene glycol dimethyl ether.

The neutralizing agent may be any basic compound which is compatible with the organic medium and with the polymer. Illustrative neutralizing agents are amines such as triethylamine and pyridine and salts of such metals as potassium, calcium, magnesium, copper and zinc. Zinc and potassium are preferred metals. The anion in said salt should also be compatible; illustrative anions are those of β-diketones such as 2,4-pentanedione, 2,4-hexanedione and 1-phenyl-1,3-butanedione. The use of metal salts of such β-diketones to neutralize acidic polymer substituents is disclosed in copending, commonly owned application Serial No. 759,198, filed July 26, 1985, the disclosure of which is incorporated by reference herein.

Neutralization is conveniently achieved by adding the neutralizing agent, either as a solid or in solution, to the polymer, which is generally maintained in solution in the solvent used for sulfonation although that solvent may

be replaced by another when appropriate. A considerable excess of the neutralizing agent, typically 10-12 moles per mole of polymer sulfonic acid groups, is generally used. The neutralization reaction may ordinarily be conveniently conducted at moderate temperatures in the range of about 20-40°C.

Following neutralization, the sulfonated polycarbonate salt may be isolated by conventional methods. These may include evaporation of solvent or precipitation by addition of a non-solvent.

Sulfonated polymers prepared as described herein frequently contain substantial proportions of entrained sulfate salt. Depending on the end use intended, it may be necessary to wash the polymer thoroughly with a polar liquid such as water or an alcohol to remove a major proportion of said salt. Extraction conditions are frequently advisable for such washing. After washing, the sulfonated polymer typically has a sulfonate content corresponding to about 0.25-3.0% sulfur. For some uses, for example as a flame retardant agent for polycarbonates as described hereinafter, salt removal may be unnecessary.

The method of this invention is illustrated by the following examples.

Example 1

A 2:1 sulfur trioxide-triethyl phosphate complex was first prepared by adding 3.45 grams (41.8 mmol.) of sulfur trioxide dropwise under nitrogen at 0°C, with stirring, to a solution of 3.65 grams (20 mmol.) of triethyl

phosphate in 250 ml. of 1,2-dichloroethane. Stirring was continued for 15 minutes, after which the complex solution was added to a solution (at room temperature) in 2 liters of 1,2-dichloroethane of 100.5 grams (396 mmol. based on structural units) of a bisphenol A polycarbonate having an intrinsic viscosity (measured in chloroform at 25°C) of 0.60 dl./g. Stirring was continued for 30 minutes, after which 20 ml. of 2-propanol was added followed by 15.4 grams (105 mmol.) of potassium 2,4-pentanedionate. After stirring for an additional hour, the 1,2-dichloroethane was removed by vacuum stripping. The residue was poured into 8 liters of methanol, whereupon the potassium salt of the sulfonated polycarbonate precipitated. It was collected by filtration and dried in a vacuum oven at 80°C. It was found by analysis to contain 1.21% sulfur (theoretical 0.62%) and 1.43% potassium (theoretical 0.76%).

<u>Example 2</u>

The procedure of Example 1 was repeated. The product obtained by filtration was washed thoroughly with water to remove entrained salts and dried in a vacuum oven at 80°C. It had an intrinsic viscosity of 0.45, a sulfur content of 0.46% and a potassium content of 0.61%.

The sulfonated polycarbonates prepared by the method of this invention have uses identical or similar to those of previously known sulfonated polycarbonates. For example, they are useful as anti-static agents and as compatibilizers for impact-modified blends of substantially aromatic polymers such as polycarbonates, polyphenylene oxides, saturated aromatic polyesters and polyetherimides with ionomeric elastomers, as described in the aforementioned European Patent Application 136,221. An illustration of the latter utility is provided by the following example.

Example 3

A blend is prepared from the following:

51.8 parts of a 2,2',6,6'-tetramethylbisphenol A polycarbonate having a molecular weight of 15,500 and an intrinsic viscosity of 0.53 dl./g.

27.0 parts of "Monsanto Lustrex HH-101", a commercially available styrene homopolymer having a molecular weight of about 106,000 and an intrinsic viscosity in toluene at 25°C of 0.80 dl./g.

10.6 parts of the zinc salt of a sulfonated EPDM rubber having about 0.15 mole percent of sulfonate groups based on mers in the polymer and prepared from "Vistalon 3708", a commercially available EPDM rubber available from Exxon Corporation which has a molecular weight of about 50,000.

10.6 part of the sulfonated polycarbonate of Example 1.

7.1 phr. of triphenyl phosphate.

10.6 phr. of zinc stearate.

The composition is prepared by blending the above, mixing in a jar mill for 2 hours and extruding on a twin

screw extruder. The extruded material is quenched in water, pelletized and dried.

The sulfonated polycarbonates prepared by the method of this invention are also useful as flame retardant additives for other resins, particularly polycarbonate resins. Accordingly, another aspect of the invention is a flame-resistant resinous composition comprising a major proportion of at least one aromatic polycarbonate resin and a minor flame retardant proportion of a sulfonated polycarbonate prepared as described hereinabove. Such compositions may also contain other commonly known additives such as ultraviolet radiation absorbers, hydrolytic stabilizers, color stabilizers and the like.

The proportion of sulfonated polycarbonate in the resinous compositions of this invention is not critical, so long as it imparts the desired flame retardant properties. In general, about 0.8-5.0% by weight is suitable.

The utility of the sulfonated polycarbonates as flame retardant agents is illustrated by the following example.

Example 4

Several blends were prepared from the composition of Example 1 and a major proportion of the corresponding non-sulfonated polycarbonate, by tumble mixing the resins in a jar mill for 1 hour and extruding at 288°C in a single screw extruder at a screw speed of 30 rpm. The extrudate were quenched in water, pelletized and dried at 80°C in a circulating oven. The dried pellets were injection molded

at 310°C into test specimens as prescribed by Underwriters' Laboratories Bulletin UL-94 and were tested for flammability in accordance with the test procedure. The specimens were rated V-0, V-I or V-II based on the burning properties of five specimens. The criteria for each rating was as follows.

V-0: Average flaming and/or glowing after removal of the igniting flame not in excess of 5 seconds, and none of the specimens drip particles which ignite absorbent cotton.

V-I: Average flaming and/or glowing after removal of the igniting flame not in excess of 25 seconds, and none of the specimens drip particles which ignite absorbent cotton.

V-II: Average flaming and/or glowing after removal of the igniting flame not in excess of 25 seconds, and the specimens drip flaming particles which ignite absorbent cotton.

The test procedure requires that five specimens be subjected to the test. In the first burn, each must satisfy the V-0 requirements to pass. It is then subjected to a second burn in which the rating is assigned. All specimens must meet the standard in order to achieve the rating; otherwise, the five test specimens receive the rating of the worse single specimen. In addition, a test bar which continues to burn for more than 25 seconds after removal of the igniting flame is classified for the purposes of this invention as failing the test.

The results attained by the compositions of this invention are listed in the following table. The control was an unsulfonated polycarbonate which did not contain a flame retardant agent.

| % sulfonated resin | First burn, sec. | Second burn, sec. | Rating |
|---|---|---|---|
| Control | 4.9 | 20.1* | Fail |
| 0.5 | 1.7 | 7.2 | V-I |
| 1.0 | 1.5 | 4.2 | V-0 |
| 2.0 | 1.1 | 2.4 | V-0 |

*Flaming drip.

In another application of the sulfonated polycarbonates prepared by the method of this invention, a polycarbonate article is surface sulfonated in a medium which is not a solvent therefor. The surface sulfonated article may then be dipped in a metal salt solution to effect an ionexchange reaction, yielding the sulfonate salt of the metal. It is then possible to reduce the metal to deposit an ultra-thin metal layer on the polycarbonate article.

What is claimed is:

1. A method for sulfonating a polymer containing structural units of the formula

(I) $$-O-A^1-O-\overset{\overset{O}{\|}}{C}-,$$

wherein $A^1$ is a divalent aromatic hydrocarbon radical, which comprises reacting said polymer with a complex of sulfur trioxide with a phosphate ester having the formula

(II) $$(RO)_3PO,$$

wherein R is a lower alkyl or lower aryl radical.

2. A method according to claim 1 wherein R is a straight chain alkyl radical having up to 4 carbon atoms.

3. A method according to claim 2 which also includes the step of neutralizing the sulfonated polymer in a non-aqueous medium.

4. A method according to claim 3 wherein $A^1$ has the formula

(III) $$-A^2-Y-A^3- ,$$

wherein each of $A^2$ and $A^3$ is a single-ring divalent aromatic radical and Y is a bridging radical in which one or two atoms separate $A^2$ from $A^3$.

5. A method according to claim 4 wherein the molar ratio of sulfur trioxide to phosphate ester in the complex is 2:1 and the reaction temperature is in the range of about 10-50°C.

6. A method according to claim 5 wherein R is ethyl.

7. A method according to claim 6 wherein neutralization is achieved by contacting the sulfonated polymer with a metal salt of at least one β-diketone.

8. A method according to claim 7 wherein the metal is zinc or potassium.

9. A method according to claim 8 wherein the polymer has a weight average molecular weight within the range of about 10,000-100,000.

10. A method according to claim 9 wherein the polymer is a polycarbonate homopolymer.

11. A method according to claim 10 wherein each of $A^2$ and $A^3$ is p-phenylene and Y is isopropylidene.

12. A method according to claim 11 wherein the β-diketone is 2,4-pentanedione.

13. A flame-resistant resinous composition comprising a major proportion of at least one aromatic polycarbonate and a minor proportion of a sulfonated polymer prepared by the method of claim 4.

14. A composition according to claim 13 wherein the polycarbonate is a bisphenol A polycarbonate.

15. A composition according to claim 14 wherein $A^1$ has the formula

(III) $$-A^2-Y-A^3- ,$$

wherein each of $A^2$ and $A^3$ is a single-ring divalent aromatic radical and Y is a bridging radical in which one or two atoms separate $A^2$ from $A^3$.

16. A composition according to claim 15 wherein the sulfonated polymer is a zinc or potassium salt.

17. A composition according to claim 16 wherein the sulfonated polymer has a weight average molecular weight within the range of about 10,000-100,000.

18. A composition according to claim 17 wherein the sulfonated polymer is a polycarbonate homopolymer.

19. A method according to claim 18 wherein each of $A^2$ and $A^3$ is p-phenylene and Y is isopropylidene.

WHP:kbl